# FASCICULE DE BREVET EUROPEEN

(11) **EP 2 978 579 B1**
(45) Date de publication et mention de la délivrance du brevet: **12.04.2017**
(21) Numéro de dépôt: 14718341.2
(22) Date de dépôt: 25.03.2014
(51) Int. Cl.: B29C 39/02, B29C 39/26, B29C 33/38, B29C 37/00, B29C 33/30, B28B 21/82

(54) **PROCEDE DE FABRICATION D'UN OBJET DE FORME COMPLEXE EN UN MATERIAU INORGANIQUE OU ORGANIQUE DURCI**
VERFAHREN ZUR HERSTELLUNG EINES EINE KOMPLEXE FORM AUFWEISENDEN GEGENSTANDES AUS EINEM ORGANISCHEN ODER INORGANISCHEN GEHÄRTETEN MATERIAL
PROCESS FOR MANUFACTURING AN ARTICLE WITH A COMPLEX SHAPE WITH AN ORGANIC OR INORGANIC HARDENED MATERIAL

(30) Priorité: 28.03.2013 FR 1352838
(43) Date de publication de la demande: 03.02.2016
(73) Titulaire: Commissariat à l'Énergie Atomique et aux Énergies Alternatives, 75015 Paris (FR)
(72) Inventeur: MOURIER, Véronique, F-38430 Saint Jean de Moirans (FR); REVIRAND, Pascal, F-38120 Saint Egreve (FR); MAUGUEN, Gaëlle, F-38000 Grenoble (FR); FATHALLAH, Tarek, F-38500 Voiron (FR)
(74) Mandataire: Brevalex
(86) Numéro de dépôt international: PCT/EP2014/055991
(87) Numéro de publication internationale: WO 2014/154712

(56) Documents cités:
- FR-A1- 2 018 534
- FR-A1- 2 903 339
- US-A- 6 099 792
- US-A1- 2003 078 153
- US-A1- 2010 105 539

## Description

### DOMAINE TECHNIQUE

La présente invention a trait à un procédé de fabrication d'un objet moulé en un matériau inorganique ou organique durci, de forme complexe, ledit procédé se déroulant dans un milieu comprenant au moins un solvant, notamment un solvant organique, de l'eau ou un mélange comprenant de l'eau et un solvant organique, ledit matériau inorganique durci étant classiquement un matériau issu d'un procédé sol-gel, tandis que le matériau organique durci est classiquement un matériau organique polymérique.

Ce procédé, de par la diversité des objets qu'il permet de préparer, trouve application dans de nombreux domaines, qui seront exposés ci-après.

### ÉTAT DE LA TECHNIQUE ANTÉRIEURE

La préparation d'un objet en un matériau polymérique organique peut se dérouler majoritairement selon deux processus, qui sont les suivants :
- la polymérisation en chaîne ; et
- la polymérisation par étapes, telle que la polycondensation.

Dans le cadre de la polymérisation en chaîne, cela implique au moins une étape de polymérisation de précurseurs du matériau, ces précurseurs pouvant être des monomères voire des oligomères qui vont réagir ensemble, après avoir formé des centres actifs (tels que des radicaux ou des ions), pour former des chaînes polymériques constitutives dudit matériau.

Dans le cadre de la polymérisation par étapes, cela implique au moins une étape de polymérisation de précurseurs du matériau par réaction entre des groupes fonctionnels portés par ces précurseurs, un des exemples classiques de la polymérisation par étapes étant la polycondensation.

En variante, la préparation d'un objet en un matériau polymérique peut impliquer, à la place d'une étape de polymérisation *stricto sensu,* une étape de réticulation de chaînes polymériques préexistantes, ce qui signifie, en d'autres termes, que ces chaînes polymériques vont former, à l'issue de cette étape de réticulation, un réseau tridimensionnel constitué de chaînes polymériques liées entre elles via des ponts de réticulation. En d'autres termes, les chaînes polymériques préexistantes comportent des fonctions aptes à réagir avec un agent de réticulation lors de l'étape de réticulation, pour former ledit réseau tridimensionnel (on parle alors de réticulation chimique) ou encore comportent des fonctions aptes à réagir spontanément entre elles ou suite à une stimulation physique (on parle alors de réticulation physique).

Que ce soit pour l'étape de polymérisation ou l'étape de réticulation, lorsqu'elles sont réalisées dans un milieu comprenant un solvant, l'objet résultant de ces étapes est un objet, qui peut emprisonner, en son sein, au moins une partie du solvant, qui doit être éliminé pour compléter la réalisation de l'objet.

Les techniques de séchage, telles que le séchage évaporatif, engendrent un objet sec (c'est-à-dire dénué de solvant), qui peut présenter, de façon désavantageuse, des craquelures et des fissurations en raison de la présence de fortes tensions superficielles au niveau des pores emprisonnant le solvant. Qui plus est, lorsque cette technique est mise en oeuvre avec une solution polymérisable coulée dans un moule ouvert sur l'extérieur (lorsqu'il s'agit notamment de réaliser un objet de forme plus complexe qu'un monolithe), il s'avère que le séchage de l'objet n'est pas homogène selon toutes les directions, ce qui peut conduire à un objet, dont la forme ne correspond pas au moule de départ. Enfin, le séchage non homogène de l'objet induit, par ailleurs, des contraintes mécaniques supplémentaires, qui favorisent l'apparition de fissures au sein de l'objet.

Quant à la préparation d'un objet par voie sol-gel, celle-ci consiste à préparer une solution contenant des précurseurs à base d'éléments métalliques ou métalloïdes (qui peuvent être des composés organométalliques ou des sels métalliques) et un ou plusieurs solvants organiques, la solution résultante formant ainsi un sol (qui peut être également appelé solution sol-gel). Du fait de l'ajout d'eau à la formulation, les précurseurs contenus dans cette solution sol-gel subissent, en partie, une étape d'hydrolyse et une étape de condensation, pour former un réseau d'oxyde emprisonnant le solvant, de sorte à former un gel. Le gel est ensuite amené à être séché, pour former à l'issue de ce séchage un objet monolithique.

A l'heure actuelle, deux techniques de séchage prédominent :
- le séchage évaporatif ; et
- le séchage supercritique.

Le séchage évaporatif consiste à éliminer le ou les solvants organiques présents dans la solution sol-gel par chauffage à pression atmosphérique ou sous pression réduite (à savoir, une pression inférieure à la pression atmosphérique). A l'issue de ce séchage, il est obtenu un gel sec (appelé également xérogel) se présentant sous forme d'un monolithe poreux, qui peut présenter, de façon désavantageuse, des craquelures et des fissurations en raison de la présence de fortes tensions superficielles au niveau des pores. Qui plus est, lorsque cette technique est mise en oeuvre avec une solution sol-gel coulée dans un moule ouvert sur l'extérieur (lorsqu'il s'agit notamment de réaliser un objet de forme plus complexe qu'un monolithe), il s'avère que le séchage du gel n'est pas homogène selon toutes les directions, ce qui peut conduire à un objet, dont la forme ne correspond pas au moule de départ. Enfin, le séchage non homogène du gel induit, par ailleurs, des contraintes mécaniques supplémentaires, qui favorisent l'apparition de fissures au sein de l'objet. Cette technique est notamment décrite dans US 2003/078153, qui expose la fabrication de solutions pour l'élaboration de monolithes dopés, ces monolithes pouvant être notamment élaborés dans des moules comportant au moins une pièce amovible sous forme d'un insert (par exemple, référence 430 sur la figure 10), laquelle peut être retirée une fois la gélification obtenue, l'étape de séchage étant effectuée à moule ouvert voire même à l'extérieur du moule.

Quant au séchage supercritique, il consiste, comme son nom l'indique, à soumettre la solution sol-gel à des conditions supercritiques, moyennant quoi la phase gazeuse et la phase liquide deviennent indiscernables. Ce principe de séchage est utilisé, notamment, dans le procédé décrit dans US 7,216,509.

Si cette technique de séchage peut permettre d'obtenir un séchage de l'objet dans son moule sans retrait volumique, l'utilisation d'un moule ouvert sur l'extérieur ne permet toutefois pas d'obtenir un contrôle sur toutes les faces de l'objet obtenu, notamment sur la face qui est directement en contact avec l'extérieur.

En variante, il est proposé, dans US 6 099 792, de procéder à la fermeture du moule par le recouvrement de la face du gel affleurant dans le moule par une quantité appropriée d'un liquide faisant office de couvercle du moule avant de procéder au mûrissement du gel et à son séchage par voie supercritique.

Ainsi, en résumé que ce soit pour la polymérisation, la réticulation ou la voie sol-gel, lorsqu'elles sont réalisées dans un milieu comprenant un solvant, le séchage de l'objet n'est classiquement pas homogène selon toutes les directions, ce qui peut conduire à un objet, dont la forme ne correspond pas au moule de départ, ce qui empêche la fabrication d'objets de forme complexe. Enfin, le séchage non homogène de l'objet induit, par ailleurs, des contraintes mécaniques supplémentaires, qui favorisent l'apparition de fissures au sein de l'objet.

Au vu de ce qui existe, les auteurs de la présente invention se sont donc fixé pour objectif de proposer un procédé de fabrication d'un objet moulé spécifique en un matériau inorganique ou organique durci ne présentant pas les inconvénients susmentionnés et qui permettent, qui plus est, l'obtention d'objets de forme complexe.

### EXPOSÉ DE L'INVENTION

Pour surmonter ces inconvénients, les auteurs de la présente invention proposent un procédé de fabrication d'un objet moulé à partir d'un moule comprenant une cavité interne comprenant un ou plusieurs compartiments et au moins une pièce amovible présente au sein de ladite cavité interne, ledit objet étant en un matériau organique ou inorganique durci, ledit procédé comprenant successivement au moins un cycle d'étapes suivantes :
a) une étape de remplissage complet d'au moins un compartiment de la cavité interne du moule, ledit compartiment ayant une forme correspondant à tout ou partie de l'objet, que l'on souhaite obtenir, par une composition liquide durcissable par réaction chimique pour former ledit matériau, ladite composition comprenant au moins un solvant ;
b) une étape de durcissement par réaction chimique de ladite composition au sein dudit moule ;
c) une étape de retrait d'au moins une pièce amovible dudit moule ; et
d) une étape de séchage au sein dudit moule de la composition durcie obtenue en b),
dans lequel tout ou partie des étapes a) à d) peuvent être réitérées avec une composition liquide durcissable identique ou différente de celle utilisée lors dudit cycle jusqu'à obtention de l'objet moulé et,
dans lequel ledit moule, au moins lors de la mise en oeuvre de chaque étape d), est une enceinte fermée, dont les parois formant frontière entre la cavité interne et l'extérieur du moule sont en au moins un matériau apte à permettre l'évacuation des gaz issus de ladite étape d).

Avant d'entrer plus en détail dans l'exposé de l'invention, nous précisons les définitions suivantes.

Par « moule consistant en une enceinte fermée », on entend un moule, dont la cavité interne n'est pas en communication directe avec l'extérieur dudit moule (ou, en d'autres termes, avec l'atmosphère ambiante dudit moule) au moins lors de la mise en oeuvre de l'étape d), ce qui signifie, en d'autres termes que la cavité interne est isolée de l'atmosphère ambiante entourant ledit moule au moins lors de la mise en oeuvre de l'étape d). Qui plus est, les parois formant frontière entre la cavité interne et l'extérieur du moule sont en un matériau apte à évacuer les gaz issus de l'étape d) et éventuellement de l'étape b) (ces gaz étant issus, en tout ou partie, de l'évaporation du ou des solvants), ce qui permet une évacuation homogène desdits gaz au niveau de toutes les faces externes de l'objet. Il en résulte un contrôle homogène des dimensions de l'objet.

Le moule comprend, au sein de la cavité interne, un ou plusieurs compartiments, ce qui permet la réalisation d'objets de forme complexe. Lorsqu'il y a plusieurs compartiments distincts, ceux-ci peuvent être générés par la présence d'une ou plusieurs pièces amovibles, se présentant, par exemple, sous forme de cylindres ou de poutres intégrés pour la réalisation de pièces pouvant présenter des trous correspondant à la forme des éléments rapportés. La ou les pièces amovibles sont destinées à être retirées lors de l'étape c), ce qui peut impliquer au sein du moule la présence d'un système de retrait de ces pièces sans ouverture du moule.

Le moule peut comprendre, en outre, au moins un orifice d'entrée permettant la communication entre l'extérieur et la cavité interne, en vue de la mise en oeuvre de l'étape a), étant entendu que cet orifice sera obturé en vue de la mise en oeuvre, au moins, de l'étape d), de préférence, par un matériau apte à permettre l'évacuation des gaz issus de l'étape d) et éventuellement de l'étape b).

Comme mentionné ci-dessus, le moule est un moule spécifique à enceinte fermée tel que défini ci-dessus au moins pour la mise en oeuvre de l'étape d). Il peut l'être, de la même manière, pour la mise en oeuvre de l'étape b) voire pour la mise en oeuvre de l'étape a), auquel cas l'étape a) pourra être mise en oeuvre, comme cela sera explicité ci-dessous, par introduction d'une seringue comprenant la composition durcissable dans la cavité interne du moule par simple traversée de la paroi. Un moule adapté à ce cas de figure est un moule consistant en une enceinte fermée formée d'un seul bloc (dit, également, monobloc), dont les parois délimitant la cavité interne de l'extérieur sont constituées uniquement d'un bloc dudit matériau apte à évacuer les gaz formés lors de l'étape d) et éventuellement lors de l'étape b). Il s'entend que !e matériau apte à évacuer les gaz formés lors de l'étape d) et éventuellement lors de l'étape b) fait partie intégrante du moule et ne résulte pas ainsi d'un élément d'apport, tel qu'un couvercle ajouté ultérieurement.

Grâce à l'utilisation d'un moule à enceinte fermée dont les parois délimitant la cavité interne de l'extérieur du moule sont en un matériau apte à évacuer les gaz issus de l'étape d) et éventuellement de l'étape b), le procédé de l'invention comble les lacunes rencontrées dans les procédés de l'art antérieur et permet notamment d'obtenir :
- des objets pouvant présenter une géométrie complexe sur toutes les faces ;
- une maîtrise du séchage permettant d'uniformiser celui-ci, ce qui se traduit par une rétraction uniforme de l'objet durci et ainsi un respect des côtes relatives de l'objet que l'on souhaite obtenir par rapport au moule de cet objet et ce qui se traduit également par un meilleur contrôle des caractéristiques microstructurales de l'objet ; en d'autres termes, le procédé permet une conservation de la proportionnalité entre les dimensions de l'objet, lorsque l'objet se contracte sous l'effet du séchage ;
- un confinement de l'atmosphère existant dans le moule, ce qui permet de préserver l'objet de l'extérieur et de prévenir ainsi d'éventuelles fissurations, et également d'opérer un séchage à une pression inférieure à la pression atmosphérique et donc de diminuer la durée de ce séchage.

De préférence, l'épaisseur des parois du moule est identique sur l'intégralité du moule, ce qui permet d'assurer une vitesse de séchage uniforme en tous points du moule.

Comme mentionné ci-dessus, de par la présence d'une ou plusieurs pièces amovibles au sein de la cavité interne du moule et de par la possibilité de pouvoir procéder à plusieurs étapes d'injection distinctes, il est possible d'obtenir des objets de forme complexe et présentant, notamment, des parties distinctes les unes des autres. Ces parties distinctes peuvent être associées chimiquement et/ou physiquement (ou mécaniquement) et peuvent présenter des propriétés distinctes, notamment en termes d'indice optique, de conductivité thermique, de conductivité électrique, d'expansion thermique, de coloration, ou plus largement en termes de propriétés diélectriques, de propriétés mécaniques, de propriétés physiques, de propriétés chimiques. On précise que l'on entend par «parties associées chimiquement» des parties liées par des liaisons chimiques fortes formées lors d'une étape de durcissement b). On précise, par ailleurs, que l'on entend par « parties associées physiquement » ou « parties associées mécaniquement » des parties liées par leurs conformations tridimensionnelles. Il est entendu qu'un même objet peut comporter, à la fois, des parties associées chimiquement et des parties associées physiquement. Il est entendu également que l'objet peut comporter des parties en un matériau autre qu'un matériau organique ou inorganique durci obtenu par le procédé, telles que des inserts ou encore tout simplement des espaces vacants résultant, par exemple, du retrait du ou des pièces amovibles présente(s) dans la cavité interne du moule.

Comme mentionné ci-dessus, le procédé de l'invention comprend une étape de remplissage complet d'au moins un compartiment de la cavité interne du moule avec une composition liquide durcissable destinée à constituer le matériau constitutif de l'objet susmentionné.

Cette étape de remplissage se fait, classiquement, par injection de ladite composition dans au moins un compartiment de la cavité interne du moule jusqu'à remplissage complet de ce dernier, par exemple, *via* une seringue traversant la paroi du moule (notamment lorsque le moule est à base d'un matériau élastomère), cette étape de remplissage pouvant se faire en plusieurs fois (soit successivement ou soit de façon non successive), notamment, lorsque la cavité interne du moule est divisée en plusieurs compartiments.

Durant la mise en oeuvre de l'étape a), le moule peut être ainsi un moule à enceinte fermée, du fait que les parois du moule sont en un matériau élastomère, ce qui permet l'introduction d'une seringue dans la cavité interne sans ouverture du moule, le matériau élastomère se rétractant lors du retrait de la seringue, ce qui permet de maintenir le moule à enceinte fermée pour, au moins, la mise en oeuvre de l'étape d).

Les parois du moule délimitant l'extérieur du moule de la cavité interne sont en un matériau apte à permettre l'évacuation des gaz produits lors de l'étape d) et éventuellement de l'étape b), ces gaz étant, en particulier, ceux résultant de l'évaporation du solvant lors de l'étape de séchage susmentionnée. Ils peuvent également résulter des autres produits du mélange réactionnel, tels que de l'eau, des produits secondaires issus de l'étape de durcissement.

Un matériau répondant à ces spécificités peut être un matériau élastomère, par exemple, un matériau élastomère de la famille des polysiloxanes.

Plus particulièrement, un tel matériau peut être un matériau élastomère appartenant à la famille des polydiméthylsiloxanes, cette famille étant caractérisée par la présence d'un enchaînement de motifs répétitifs de formule (I) suivante :

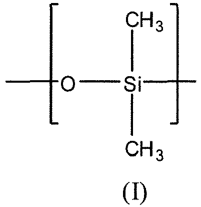

Outre la capacité à permettre l'évacuation des gaz issus de l'étape d) et éventuellement b), les matériaux élastomères ont pour avantage d'absorber les contraintes mécaniques générées lors de l'étape de durcissement et de l'étape de séchage. D'autre part, ces matériaux élastomères présentent d'excellentes propriétés de moulage, ce qui permet de respecter parfaitement les dimensions de l'objet initial.

Certains matériaux élastomères, comme cela est le cas des polydiméthylsiloxanes, sont transparents aux rayons UV, ce qui les rend intéressants lorsque l'on souhaite induire par rayons UV la polymérisation ou réticulation de la composition introduite dans le moule lors de l'étape a).

Le moule peut être à base d'autres matériaux organiques que ceux mentionnés ci-dessus ou d'autres matériaux inorganiques, dès lors qu'ils sont aptes à permettre l'évacuation des gaz produits lors d'au moins l'étape de séchage.

Préalablement à l'étape a), le procédé de l'invention peut comprendre une étape de préparation du moule de l'objet à fabriquer.

Cette étape de préparation peut consister à mouler une pièce de forme correspondant en tout ou partie à celle de l'objet que l'on souhaite fabriquer, moyennant quoi il résulte, de cette étape, un moule présentant une cavité interne dont les parois délimitant l'extérieur du moule de la cavité interne de celui-ci sont en un matériau apte à permettre l'évacuation des gaz formé lors de l'étape d) et éventuellement lors de l'étape b).

Selon la nature du matériau constitutif du moule, cette étape de préparation peut se dérouler selon différentes variantes.

A titre d'exemple, lorsque le moule comprenant un matériau du type polydiméthylsiloxane, l'étape de préparation du moule peut comprendre les opérations suivantes :
- une opération de mise en contact d'une pièce de forme correspondant à tout ou partie de l'objet que l'on souhaite fabriquer avec une solution comprenant :
   *un polymère comprenant, dans sa chaîne principale, un enchaînement de motif répétitif de formule (I) telle que définie ci-dessus et au moins deux groupes terminaux éthyléniques ; et
   *un agent de réticulation ;
- une opération de réticulation de ladite solution ; et
- une opération de retrait de la pièce de départ, moyennant quoi il subsiste ledit moule comprenant une cavité interne dont la forme correspond à l'empreinte de la pièce d'origine.

L'opération de mise en contact peut être réalisée dans un récipient dans lequel est placée la pièce susmentionnée, ce récipient étant rempli d'une solution telle que définie ci-dessus.

Le polymère susmentionné peut correspondre à un polymère de formule (II) suivante : 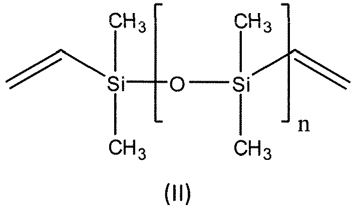 dans laquelle n représente le nombre de répétition du motif répétitif pris entre crochets.

L'agent de réticulation peut être de divers types.

Lorsqu'il s'agit de pratiquer une réticulation à chaud, l'agent de réticulation peut être un ou plusieurs peroxydes organiques, tels que le peroxyde de benzoyle, le peroxyde de dicumyle et les mélanges de ceux-ci.

Lorsqu'il s'agit de pratiquer une réticulation à froid, ce qui est le cas notamment avec les élastomères bicomposants, l'agent de réticulation peut être :
- un silicate d'alcoyle tétrafonctionnel en présence d'un catalyseur organostanneux et d'un sel de platine ;
- un agent réticulant du type R-SiX₃ ou SiX₄ en présence d'un sel métallique, dans lequel R peut être un groupe alkyle et X peut être un groupe hydrolysable, tel qu'un groupe acétoxy, alcoxy, amino, amido.

La solution susmentionnée peut être disponible commercialement, par exemple, sous forme d'un kit comprenant deux parties, une première partie comprenant ledit polymère et une deuxième partie comprenant ledit agent de réticulation, ces deux parties devant être mélangées pour constituer la solution.

L'opération de réticulation peut consister, lorsque la réticulation doit s'effectuer à chaud, à chauffer l'ensemble formé par la pièce et la solution à une température et durée appropriées (on parle, alors de thermoréticulation) pour obtenir la transformation de la solution en un matériau solide entourant la pièce de forme correspondant à tout ou partie de l'objet que l'on souhaite fabriquer.

L'opération de réticulation peut également s'effectuer à température ambiante, lorsque la réticulation peut s'effectuer à froid.

A l'issue de cette opération de réticulation, la pièce est retirée de sorte à laisser subsister uniquement un moule. Cette opération de retrait peut être précédée par une opération de découpe du matériau solide en au moins deux parties de sorte à pouvoir retirer la pièce. Dans ce cas de figure, il s'entend que les parties découpées seront réassemblées après le retrait de la pièce, tout en ménageant, si besoin est, une entrée destinée à l'introduction subséquente de la composition durcissable dans le moule.

Il est possible également d'envisager la fabrication du moule en plusieurs parties distinctes (par exemple, en deux parties), d'assembler ces parties par simple pression mécanique ou par électromagnétisme et de désassembler ces parties sans qu'il soit nécessaire de procéder à une opération de découpe.

La préparation du moule est ensuite, finalisée, quel que soit le mode de réalisation, par l'introduction d'une ou plusieurs pièces amovibles au sein du moule, via par exemple, une ouverture prévue à cet effet, l'introduction de la ou les pièces amovibles pouvant être facilitée par le biais d'un guide, la place vacante nécessaire pour la présence du guide pouvant être prévue lors du moulage de l'objet modèle, un guide étant ainsi présent au niveau de cet objet en vue que la forme de ce guide soit imprimée au sein de la cavité interne du moule.

Comme mentionné ci-dessus, il est introduit, dans au moins un compartiment de la cavité interne jusqu'à remplissage complet de ce dernier, une composition liquide durcissable par réaction chimique.

Cette composition liquide durcissable par réaction chimique peut être :
- une composition organique polymérisable et/ou réticulable, auquel cas le matériau final de l'objet sera un matériau organique polymérique ; ou
- une composition consistant en une solution sol-gel, auquel le matériau final de l'objet sera un matériau sol-gel.

Cette composition peut être également préparée préalablement à l'étape a).

Lorsque cette composition est une composition polymérisable et/ou réticulable, cette étape de préparation peut consister à mettre en contact les ingrédients nécessaires à la fabrication d'un matériau organique polymérique en milieu solvant.

Plus spécifiquement, lorsque la composition est une composition organique polymérisable, les réactifs contenus dans cette composition peuvent être :
- au moins un monomère polymérisable ;
- éventuellement, au moins un amorceur de polymérisation ; et
- au moins un solvant, par exemple, un solvant organique, de l'eau ou un mélange comprenant de l'eau et un solvant organique.

Lorsque la polymérisation se déroule selon un mécanisme radicalaire dit « en chaîne », on peut mentionner, comme monomères, des monomères vinyliques, c'est-à-dire des monomères comportant au moins une double liaison carbone-carbone, de tels monomères pouvant être des monomères oléfiniques, des monomères styréniques, des monomères (méth)acrylates (tels que l'acide méthacrylique, le diméthacrylate d'éthylèneglycol).

A titre d'amorceur de polymérisation, il peut s'agir, en particulier, d'un amorceur de radicaux libres (notamment, lorsque la polymérisation se déroule selon un mécanisme radicalaire), tels que des composés nitriles comme l'azoisobutyronitrile (symbolisé par l'abréviation AiBN).

Lorsque la polymérisation se déroule selon un mécanisme de polymérisation par étapes, les monomères mis en jeu peuvent être des couples de monomères tels que :
- un couple comprenant au moins un monomère diamine et au moins un monomère dicarboxylique ;
- un couple comprenant au moins un monomère porteur d'au moins un groupe -OH (par exemple, du résorcinol) et au moins un monomère porteur d'au moins un groupe aldéhyde (par exemple, le formaldéhyde).

Enfin, lorsque la composition est une composition réticulable, celle-ci peut comporter :
- au moins un polymère comprenant au moins un groupe fonctionnel réticulable ;
- un agent de réticulation, lorsque la réticulation est réalisée par voie chimique et non par voie physique ; et
- au moins un solvant, par exemple un solvant organique, de l'eau ou un mélange comprenant de l'eau et un solvant organique.

L'homme du métier, en fonction du matériau constitutif de l'objet à fabriquer, choisira, de manière appropriée, les ingrédients nécessaires à la fabrication dudit objet, que ce soient en termes de monomères, d'éventuels amorceurs de polymérisation, de solvants organiques, de polymères réticulables, d'éventuels agents de réticulation.

Outre la présence des ingrédients susmentionnés et d'un ou plusieurs solvants, la composition peut comprendre d'autres adjuvants, tels que :
- l'eau ;
- des catalyseurs permettant d'accélérer la réaction de polymérisation et/ou de réticulation;
- des pigments organiques ou inorganiques ;
- des composés organiques à propriétés optiques, tels que des composés fluorophores, des composés phosphorescents, des agents anti-UV, des agents antireflet ou des composés ayant une fonction réactive avec des analytes (en vue d'assurer, par exemple, la détection d'analytes).

Lorsque la composition est une solution sol-gel, cette étape de préparation peut consister à mettre en contact un ou plusieurs précurseurs moléculaires de métal ou de métalloïde avec un milieu comprenant un ou plusieurs solvants organiques et éventuellement d'autres adjuvants, tel que de l'eau, un catalyseur.

Le métal peut être choisi dans un groupe constitué par les métaux de transition, les métaux lanthanides et les métaux dits post-transitionnels des colonnes IIIA et IVA de la classification périodique des éléments. L'élément métallique de transition peut être choisi parmi Ti, V, Cr, Mn, Fe, Co, Ni, Cu, Zn, Y, Zr, Nb, Mo, Ru, Rh, Pd, Ag, Cd, Hf, Ta, W, Re, Os, Ir, Pt. L'élément lanthanide peut être choisi parmi La, Ce, Pr, Nd, Sm, Eu, Gd, Tb, Dy, Er, Yb. L'élément métallique post-transitionnel peut être choisi parmi les éléments du groupe IIIA Al, Ga, In et TI et les éléments du groupe IVA Ge, Sn et Pb.

L'élément métalloïde est choisi avantageusement parmi Si, Se, Te.

Il peut s'agir également de toutes combinaisons entre métaux de transition, métaux lanthanides, métaux post-transitionnels et métalloïdes.

Les précurseurs moléculaires de métal ou de métalloïde peuvent se présenter sous forme de sels inorganiques de métal ou métalloïde tels que des halogénures (fluorures, chlorures, bromures, iodures), des sels alcalins (tels que, par exemple, du silicate de sodium).

Les précurseurs moléculaires de métal ou de métalloïde peuvent se présenter également sous forme de composés organométalliques de métal ou métalloïde, tels que, notamment, des alcoxydes, par exemple, ceux répondant à la formule (RO)ₙM, dans laquelle M désigne le métal ou le métalloïde, n représente le nombre de ligands liés à M, ce nombre correspondant également au degré d'oxydation de M et R représente un groupe alkyle, linéaire ou ramifié, pouvant comporter de 1 à 10 atomes de carbone ou un groupe phényle.

Les précurseurs moléculaires de métal ou de métalloïde, tels que décrits ci-dessus, sont mis en contact avec un milieu comprenant un solvant organique, de manière à former une solution sol-gel.

De préférence, le solvant est un solvant organique choisi parmi :
*les monoalcools aliphatiques ou aromatiques, saturés ou insaturés, par exemple ceux de formule R¹-OH, dans laquelle R¹ représente un groupe alkyle, linéaire ou ramifié, comprenant de 1 à 30 atomes de carbone, de préférence de 1 à 10 atomes de carbone ou un groupe phényle ;
*les diols, par exemple, ceux de formule HO-R²-OH, dans laquelle R² représente un groupe alkylène, linéaire ou ramifié, comprenant de 1 à 30 atomes de carbone, de préférence de 1 à 10 atomes de carbone, ou un groupe phénylène.

A titre d'exemples de diols, on peut citer l'éthylèneglycol, le diéthylèneglycol ou encore le triéthylèneglycol.

Outre la présence d'un ou plusieurs précurseurs moléculaires et d'un ou plusieurs solvants organiques, la solution sol-gel peut comprendre d'autres adjuvants, tels que :
- l'eau, qui peut contribuer à faciliter le processus de gélification de la solution sol-gel ;
- des catalyseurs permettant d'accélérer la cinétique des réactions d'hydrolyse et de condensation lors de la transformation de la solution sol-gel en gel (ces catalyseurs pouvant être un acide inorganique, tel que l'acide chlorhydrique, un acide organique, tel que l'acide acétique) ;
- des pigments organiques ou inorganiques ;
- des composés organiques à propriétés optiques, tels que des composés fluorophores, des composés phosphorescents, des agents anti-UV, des agents antireflet ou des composés ayant une fonction réactive avec des analytes (en vue d'assurer, par exemple, la détection d'analytes) ;
- plus spécifiquement, des composés aptes à faciliter la détection de composés, comme ceux décrits dans FR 2 960 799.

Préalablement à l'étape a), la cavité interne du moule peut être amenée à subir une étape de traitement (c'est-à-dire la surface de la cavité interne destinée à être en contact avec la composition durcissable), de sorte à minimiser l'adhérence de l'objet durci et ainsi faciliter le retrait de cet objet du moule. Il s'entend que ce traitement ne doit pas modifier, ou en tout cas pas de façon substantielle, la perméabilité du moule vis-à-vis des gaz. Cette étape de traitement de surface peut consister à pratiquer une silanisation hydrophobe de la surface interne du moule (par exemple, au moyen de réactifs tels qu'un silane perfluoré, du trichlorométhylsilane).

Le moule, dans lequel est introduite la composition, peut être fixé sur un système mobile, par exemple, rotatif, qui va permettre d'obtenir des objets de meilleure qualité, le mouvement induit par le système, par exemple, un mouvement de rotation, permettant d'éviter un phénomène d'effondrement du matériau durci lors du processus de séchage ou en d'autres termes permettant de contrer l'effet de gravité. Avantageusement, le système mobile est mis en fonctionnement uniquement après l'introduction de la composition et après le durcissement de la composition de façon concomitante à la mise en oeuvre à l'étape de séchage c). Ce mouvement appliqué peut également contribuer à faciliter l'opération ultérieure de démoulage notamment pour les objets microstructurés en contact avec l'une des faces du moule, notamment la face inférieure, la viscoélasticité du moule pouvant permettre d'absorber les chocs pendant l'étape de séchage rotative.

Une fois l'étape a) achevée, le procédé comprend une étape de durcissement de la composition introduite, le durcissement emprisonnant de façon concomitante l'élément conducteur de l'électricité.

Si la composition durcissable est une composition polymérisable et/ou réticulable, l'étape de durcissement consistera en une étape de polymérisation et/ou réticulation, tandis que, si la composition durcissable est une solution sol-gel, l'étape de durcissement consistera en une étape de gélification de la solution sol-gel.

D'un point de vue pratique, cette étape peut consister à placer le moule ainsi rempli au repos pendant une durée et une température suffisantes pour la transformation de la solution sol-gel en gel ou à le placer à une température et une durée appropriées pour engendrer la polymérisation ou la réticulation de la composition. Cette durée et cette température peuvent être déterminées par l'homme du métier par des expériences de routine et peuvent varier notamment en fonction du volume de la composition, des proportions et des quantités d'ingrédients utilisés dans cette composition. De préférence, la durée de cette étape est courte, en particulier, inférieure à 20 minutes et, de préférence, inférieure à 5 minutes, de façon à limiter l'évaporation du solvant durant cette étape. En effet, si l'étape susmentionnée est lente (à savoir, si la durée fixée est longue), cela pourrait entraîner une déformation du polymère et ainsi une forme de celui-ci non conforme à la cavité interne du moule.

Par ailleurs, pour la mise en oeuvre de l'étape de polymérisation ou de réticulation, le moule peut être placé dans un environnement, qui limite l'évaporation du solvant à travers la paroi du moule, un tel environnement pouvant consister en un espace clos saturé en vapeur de solvant ou pouvant être obtenu en abaissant la température.

Après l'étape b), le procédé de l'invention comprend, dans le cadre de l'invention, une étape de retrait c) de la pièce amovible, lorsqu'elle est unique, ou d'au moins une pièce amovible du moule, lorsque le moule en comporte plusieurs. Lorsque l'introduction de la ou les pièces amovibles a été effectuée, lors de la fabrication du moule, via un ou plusieurs guides, le ou les guides maintenus au sein du moule lors des étapes a) et b) permettent de faciliter le retrait de la ou la pièces amovibles, lesquels guides permettent le déplacement de la ou lesdites pièces selon une seule direction, ce qui évite tous déplacements aléatoires susceptibles de dégrader l'intégrité physique du matériau durci.

Selon une variante de l'invention, la ou les pièces amovibles peuvent être en un matériau sacrificiel, c'est-à-dire en un matériau destiné à être dégradé ou à changer d'état puis à être éliminé au cours du procédé. En d'autres termes, dans le cadre de ce procédé, lorsque la ou les pièces amovibles sont en un matériau sacrificiel, ce dernier peut être dégradé ou peut changer d'état physique en conséquence des conditions opératoires appliquées lors de l'étape de durcissement, l'étape de retrait consistant ainsi à extraire de la cavité interne (par exemple, par simple ponction au moyen d'une seringue), les produits issus de la dégradation ou du changement d'état du matériau sacrificiel, l'espace laissé vacant ayant une forme correspondant à celle de la ou les pièces amovibles. A titre d'exemple de matériaux sacrificiels, on peut citer les cires, qui vont être aptes à changer d'état (plus spécifiquement, passage d'un état solide à un état liquide) dans les conditions opératoires appliquées lors de l'étape de durcissement, la cire liquide pouvant être retirée au moyen d'une seringue.

Une fois l'étape de retrait effectuée, le procédé peut comprendre, dans le cas où le retrait laisserait une ouverture permettant la communication de la cavité interne avec l'extérieur, une étape de fermeture dudit moule, de préférence avec un matériau obturant apte à permettre l'évacuation des gaz issus de ladite étape d) au même titre que celui des parois de la cavité interne formant frontière avec l'extérieur.

Une fois l'étape de retrait effectuée et l'éventuelle étape de fermeture du moule, le procédé de l'invention comprend une étape de séchage (étape d), moyennant quoi les gaz (dont ceux issus de la vaporisation du ou des solvants) sont éliminés par évaporation à travers les parois du moule.

Cette étape de séchage peut être réalisée selon diverses variantes, parmi lesquelles on peut citer :
- le séchage par fluide supercritique, tel que le dioxyde de carbone supercritique ;
- le séchage par chauffage ;
- le séchage sous vide ;
- le séchage sous atmosphère contrôlé ;
- une combinaison des méthodes de séchage précitées.

Il n'est pas exclu que l'étape de séchage puisse être mise en oeuvre par une combinaison des variantes susmentionnées. En particulier, lorsque l'étape de séchage combine à la fois un séchage par chauffage et un séchage sous vide, cela peut permettre de diminuer substantiellement la durée du séchage ou la température de séchage par rapport à un séchage par chauffage.

A titre d'exemple, l'étape de séchage peut consister à placer le moule dans un four rotatif et à chauffer ce moule à une température et une durée appropriées (par exemple, 45°C pendant 5 jours) pour permettre l'élimination par évaporation du ou des solvants organiques, ce chauffage pouvant être combiné à une mise sous vide.

Une fois un cycle d'étapes a), b), c) et d) réalisé, le procédé de l'invention peut comprendre la réitération d'une ou plusieurs de ses étapes, sans que la séquence a), b), c) et d) ne soit forcément respectée. En d'autres termes, le procédé, une fois un cycle d'étapes a), b), c) et d) réalisé, peut comprendre successivement une étape a) suivie d'une étape b) suivie d'une étape d), sans qu'il n'y ait d'étape c) de retrait d'une ou plusieurs pièces amovibles du moule.

En outre, à l'issue du procédé, il est mis classiquement en oeuvre une étape de retrait de l'objet durci du moule, cette étape de retrait pouvant se faire par découpe du moule de sorte à libérer l'objet.

L'objet formé par le procédé de l'invention peut être à son tour utilisé comme modèle pour constituer un moule, lequel pourra être utilisé, ensuite, dans un procédé comprenant des étapes conformes à l'invention (étapes a), b), c) et d) susmentionnées), ces opérations pouvant être répétées autant de fois que possible jusqu'à l'obtention d'un objet présentant les dimensions souhaitées. Ceci peut être particulièrement intéressant pour réaliser des objets micrométriques microstructurés, sans avoir à recourir à des moyens de microstructuration.

Le matériau constitutif de l'objet est un matériau polymérique (tel que des aérogels, des xérogels), lorsque la composition de départ est une composition polymérisable et/ou réticulable, tandis que le matériau constitutif de l'objet est un matériau sol-gel (tel qu'un aérogel ou un xérogel) issu du séchage du gel, ce matériau pouvant être transformé en céramique ou en verre par un traitement thermique ultérieur.

Comme déjà mentionné, le procédé de l'invention permet d'envisager la préparation d'objets de formes les plus diverses, ce procédé trouvant ainsi application dans de nombreux domaines, tels que :
- le domaine de la détection des gaz, le procédé de l'invention pouvant être utilisé pour concevoir des capteurs permettant de guider des ondes électromagnétiques, pouvant se présenter sous forme de structures particulières (telles que des fibres optiques) ;
- le domaine des lasers, le procédé de l'invention pouvant être notamment utilisé pour concevoir des lasers à colorants, ces derniers pouvant être incorporés dans la solution-gel qui sert de base à la préparation des lasers, les monolithes obtenus par le procédé de l'invention présentant des dimensions précises et une excellente qualité de surface ;
- le domaine de la microfluidique, le procédé de l'invention pouvant être notamment utilisé pour concevoir des microcanaux, qui peuvent être élaborés sur des supports, tels que des plaques de verre ;
- le domaine de l'analyse chimique, le procédé de l'invention pouvant être notamment utilisé pour concevoir des microcolonnes destinées à entrer dans la constitution d'appareils chromatographiques, tels que la chromatographie en phase gazeuse ;
- le domaine de l'électro-osmose, le procédé de l'invention pouvant être notamment utilisé pour concevoir des membranes microporeuses et des dispositifs à microcanaux;
- le domaine de l'électrophorèse, le procédé de l'invention pouvant être notamment utilisé pour concevoir des microréacteurs ;
- le domaine de l'optique, le procédé de l'invention pouvant être utilisé pour concevoir des lentilles, des guides d'onde ou de lumière et plus particulièrement des lentilles de Fresnel, comme des microlentilles, et des matrices de microlentilles ;
- le domaine de l'énergie, le procédé de l'invention pouvant être utilisé pour concevoir des matériaux d'électrode, notamment pour les piles à combustible ou les supercondensateurs ou encore pour concevoir des matériaux à stockage de combustible, tel que l'hydrogène ;
- le domaine de la microélectronique, le procédé de l'invention pouvant être utilisé pour concevoir des matériaux isolants, des matériaux piézoélectriques ou des matériaux diélectriques, ces matériaux pouvant être microstructurés.

Concernant les guides de lumière, ceux-ci peuvent être réalisés à l'aide d'un matériau poreux obtenus par la technique sol-gel, renfermant un capteur chimique destiné à réagir en présence d'un analyte, tel qu'un analyte gazeux, les propriétés optiques du matériau pouvant changer en présence d'un analyte donné. On peut ainsi accéder à une grande sensibilité de détection.

Concernant la réalisation de dispositifs microstructurés, grâce au procédé de l'invention, il est ainsi possible d'éviter le recours à des procédés de microstructuration tels que la gravure, ces derniers pouvant laisser un état de surface non maîtrisé.

Pour cela :
- on utilise une pièce microstructurée, destinée à être reproduite, de façon à former un moule ;
- on reproduit cette pièce par le procédé de l'invention, ce qui permet d'obtenir une pièce présentant des microstructures aux dimensions réduites.

Il est possible de réitérer ces opérations, en formant un moule à partir de la pièce précédemment obtenue par le procédé de l'invention. En multipliant les itérations, on peut obtenir une pièce micrométrique sans avoir à recourir à des moyens de microstructuration.

Outre les avantages déjà mentionnés ci-dessus, le procédé de l'invention s'avère également facile à mettre en oeuvre.

L'invention va à présent être décrite en référence aux modes de réalisation particuliers donnés ci-dessous à titre illustratif et non limitatif.

### BRÈVE DESCRIPTION DES DESSINS

La figure 1 représente les différentes étapes (respectivement parties a, b, c, d, e, f, g, h, i, j, k, l et m) de la préparation d'un objet conformément au procédé de l'invention mis en oeuvre dans l'exemple 1 ci-dessous.
La figure 2 représente une vue tridimensionnelle de l'objet fabriqué conformément au procédé de l'invention mis en oeuvre dans l'exemple 2 ci-dessous.
La figure 3 représente une vue tridimensionnelle du modèle utilisé dans le cadre de l'exemple 2 ci-dessous.
La figure 4 représente une vue en coupe transversale du modèle avec ses dimensions utilisé dans le cadre de l'exemple 2 ci-dessous.
La figure 5 représente les différentes étapes (respectivement parties a, b, c, d, e, f, g, h, i et j) de la préparation d'un objet conformément au procédé de l'invention mis en oeuvre dans l'exemple 2 ci-dessous.
La figure 6 représente les différentes étapes (respectivement parties a, b, c, d, e, f, g, h, i et j) de la préparation d'un objet conformément au procédé de l'invention mis en oeuvre dans l'exemple 3 ci-dessous.

### EXPOSÉ DÉTAILLÉ DE MODES DE RÉALISATION PARTICULIERS

### EXEMPLE 1

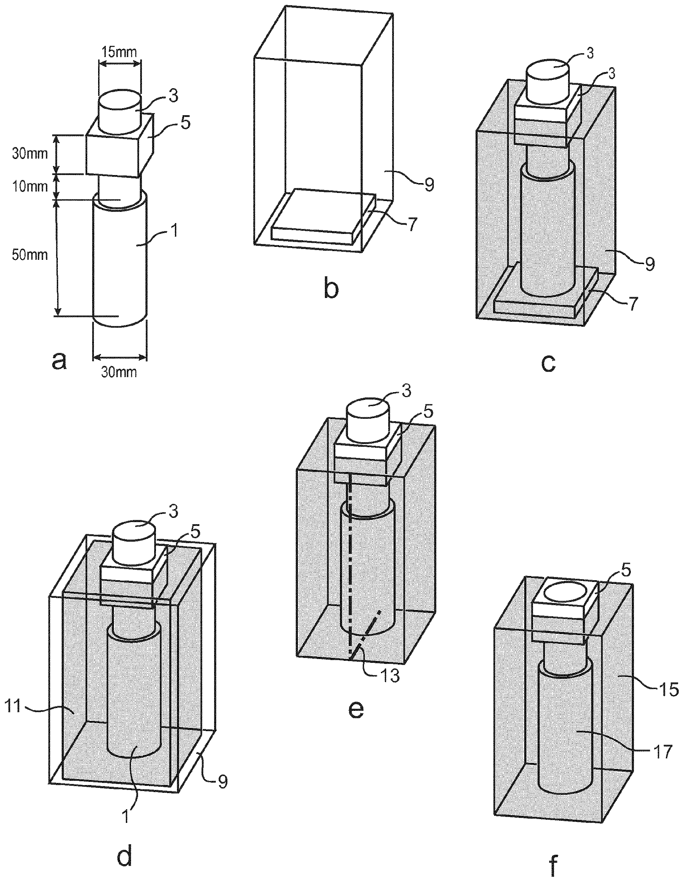

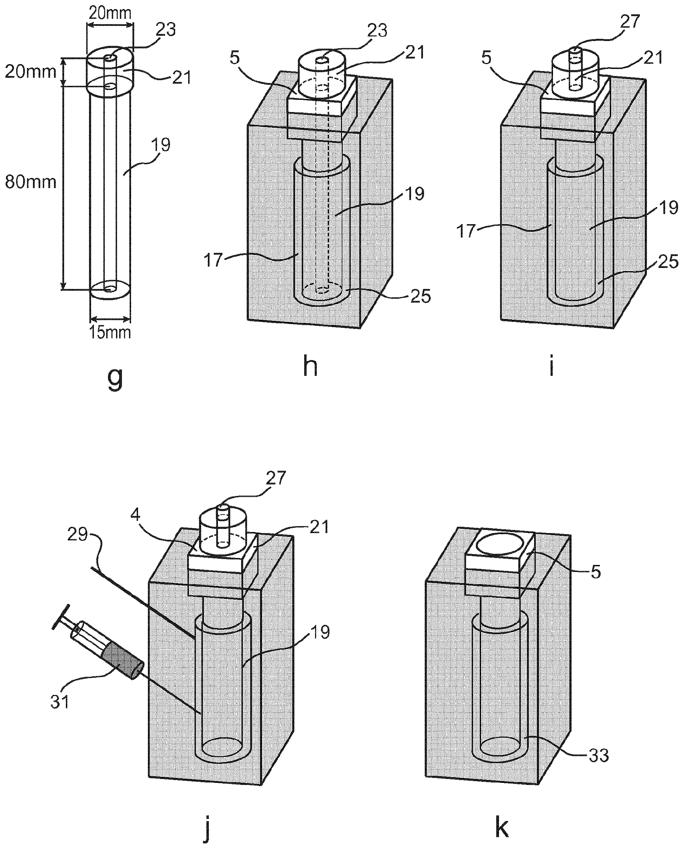

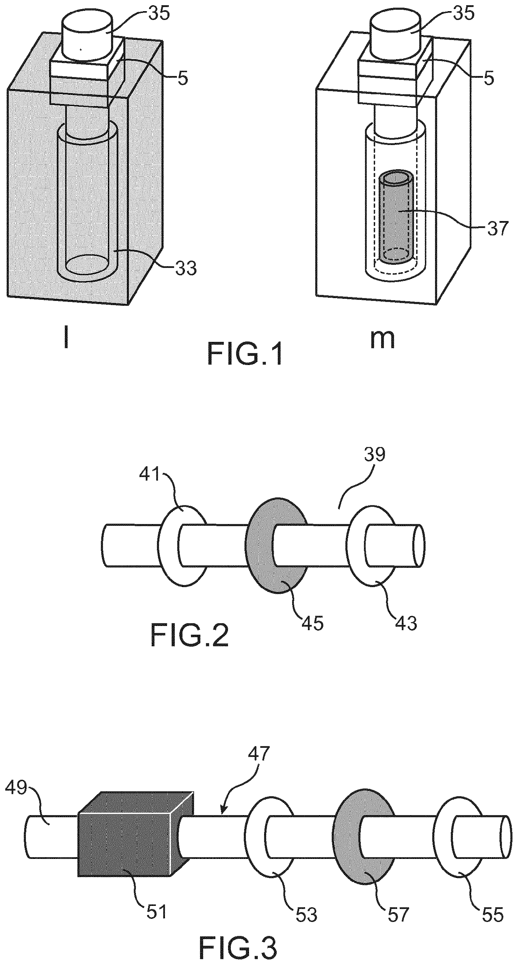

Cet exemple illustre la préparation d'un objet à partir du procédé de l'invention, cet objet se présentant sous forme d'un tube cylindrique fermé à l'une de ses extrémités, lequel présente un diamètre externe de 15 mm, un diamètre interne de 7,5 mm et une hauteur de 25 mm, lequel objet est préparé à partir d'un modèle en aluminium de forme complexe représenté sur la partie a) de la figure 1, lequel modèle comprend deux parties cyclindriques de diamètres respectifs 30 mm et 15 mm (référencées 1 et 3 sur la partie a) de la figure 1) et d'un guide amovible référencé 5 de forme cubique de 30 mm de côté, dont deux faces opposées sont traversées par un trou cylindrique permettant l'introduction dans ce guide de la partie cylindrique 3.

### a) Fabrication du moule

Le moule est préparé par la succession d'opérations suivantes :
1- Préparation à l'aide d'une spatule d'un mélange (20 g) de deux composants, respectivement du polydiméthylsiloxane (PDMS) et un agent de réticulation selon un ratio de 10/1 (ces composants étant disponibles auprès de Dow-Corning sous la dénomination de SylGard 184) ;
2- Coulée de 10 g de ce mélange 7 dans un récipient parallélépipédique 9 de dimensions (100 mm*40 mm* 40 mm) (partie b) de la figure 1) ;
3- Mise sous vide poussé de l'ensemble pendant 20 minutes en cassant le vide suivi d'une cuisson à 70°C pendant 2 heures ;
4- Après cuisson du mélange à 80°C pendant une heure (engendrant, ainsi, la réticulation du PDMS), placement du modèle au centre du récipient, de sorte à ce que la partie cylindrique 1 soit en contact avec le centre de la pièce de PDMS présente au fond du récipient (partie c) de la figure 1) ;
5- Préparation à l'aide d'une spatule d'un mélange (140 g) de deux composants, respectivement du polydiméthylsiloxane (PDMS) et un agent de réticulation selon un ratio de 10/1 (ces composants étant disponibles auprès de Dow-Corning sous la dénomination de SylGard 184) suivi d'un dégazage sous vide poussé (20 minutes en cassant le vide) ;
6- Coulée du mélange 11 sur le modèle à mouler (posée sur la couche de PDMS préalablement mise en oeuvre) jusqu'à immersion de l'objet jusqu'à 80% de la hauteur du guide (partie d) de la figure 1);
7- Application d'un vide poussé pendant 30 minutes pour dégazer l'ensemble ;
8- Chauffage de l'ensemble à 70°C pendant 2 heures, de sorte à engendrer la réticulation du polydiméthylsiloxane, moyennant quoi il se forme une couche solide autour du modèle ;
9- Retrait du moule du récipient parallélépipédique;
10- Ouverture du moule en PDMS en deux parties à l'aide d'un scalpel selon un plan de découpe 13 indiqué en pointillés sur la partie e) de la figure 1 pour retirer la pièce de départ prise dans le moule en PDMS ;
11- Placement uniquement du guide amovible 5 au niveau de l'ouverture supérieure du moule (partie f) de la figure 1) puis collage des deux parties susmentionnées par plasma selon les conditions suivantes :
   a- On place les deux parties du moule dans un plasma O₂ (Plasma O₂ AST Product Inc), les conditions suivantes étant appliquées pour activer les fonctions de surface du PDMS (PO₂ 1 bar ; Puissance 20 Watt; Durée 20 sec ; Réseau d'adaptation 50-50% ; Gaz 120 ; Flux de gaz 60 ; Point de fonctionnement 0,5) ;
   b- Après application du plasma, les deux surfaces du moule à coller sont mises en contact. Une pression est exercée pour améliorer le contact entre les deux surfaces et améliorer ainsi le collage ;
   c- L'ensemble est mis à l'étuve à 80°C pendant 4 heures, moyennant quoi l'on obtient un moule 15 dont la cavité interne 17 présente une forme correspondant à celle du modèle (partie f) de la figure 1) ;
12- Introduction via le guide amovible d'une tige représentée sur la partie g) de la figure 1, cette tige comprenant une partie cylindrique inférieure 19 de 15 mm de diamètre et 80 mm de longueur et une partie cylindrique supérieure 21 de 20 mm de diamètre et 20 mm de longueur et comprenant en son centre un trou traversant 23 de 1 mm de diamètre, ce trou étant destiné à permettre le passage de l'air lors du retrait ultérieur de la tige (après l'injection de la solution sol-gel et après la gélification), l'introduction se faisant par la partie cylindrique inférieure jusqu'à ce que la partie cylindrique supérieure bute sur le guide, laissant ainsi l'extrémité inférieure de la partie cylindre inférieure à 10 mm du fond de la cavité interne 17 du moule, l'espacement 25 ainsi ménagé étant destiné à constituer le fond du tube cylindrique (partie h) de la figure 1) ;
13- Obturation du trou traversant 23 par un bouchon hermétique 27 pour, d'une part, constituer un caractère « enceinte fermée » au moule et, d'autre part, pour empêcher la solution sol-gel de remonter le long du trou lors de l'injection de celle-ci (partie i) de la figure 1).

### b) Fabrication de la solution sol-gel

La solution sol-gel est préparée par la succession suivante d'opérations :
1- Mélange à température ambiante sous agitation de 4,66 mL (0,0208 mol) de tétraéthylorthosilicate (78-10-4 Sigma-Aldrich) et 1,6 mL (0,068 mol) d'eau, auxquels on ajoute 4 mL d'éthanol anhydre puis 4 µL d'acide chlorhydrique à 1M sous agitation ;
2- Mise de la solution obtenue en 1 dans un pilulier fermé hermétiquement à l'étuve à 80°C pendant 4 heures pour hydrolyse ;
3- Après 4 heures d'hydrolyse, retrait de solution de l'étuve et refroidissement à température ambiante.

### c) Fabrication de l'objet en tant que tel

L'objet est préparé selon la succession d'opérations suivantes :
1- Introduction d'une aiguille 29 dans la partie supérieure du moule pour permettre l'évacuation de l'air, lorsque la solution de sol-gel sera injectée ;
2-Ajout à la solution obtenue selon le paragraphe précédent, de 0,5 mL d'une solution préparée par dissolution de 30 µL d'une solution d'ammoniaque dans 5 mL d'éthanol anhydre, la solution sol-gel résultante devant être injectée dans le moule juste après cette étape.
3- Prélèvement de 5 mL de la solution sol-gel précédemment préparée ;
4- Insertion de l'aiguille 31 de la seringue contenant la solution sol-gel (qui vient juste d'être prélevée) dans la cavité interne du moule suivie d'une injection lente de la solution pour éviter d'avoir un régime turbulent en sortie de l'aiguille 31 et éviter la formation de bulles d'air sur les parois du moule (partie j) de la figure 1) ;
5- Retrait de l'aiguille d'injection 31 lorsque la cavité interne du moule est remplie de la solution sol-gel puis retrait de l'aiguille 29;
6- Mise au repos du moule contenant la solution sol-gel à température ambiante pendant 1 heure jusqu'à l'obtention d'un gel ;
7-Retrait du bouchon hermétique 27 et la tige, le guide permettant de maintenir la tige droite pendant le retrait de la tige et de ne pas abîmer le gel formé 33 (partie k) de la figure 1) ;
8-Fermeture du moule par un bouchon hermétique 35 de 15 mm de diamètre par obturation de l'ouverture concentrique du guide (partie I) de la figure 1) ;
9- Séchage de l'ensemble dans un four rotatif (Agilent technologies, model GA) à 70°C pendant 10 jours, moyennant quoi l'on obtient un objet 37 en matériau sol-gel présentant des dimensions réduites par rapport au modèle (partie m) de la figure 1) ;
10- Après séchage, ouverture du moule en PDMS en deux parties pour retirer l'objet en matériau sol-gel ainsi fabriqué.

L'objet obtenu présente des dimensions plus faibles que celles de la pièce d'origine (50% de rétreint), sans que cela n'affecte la forme par rapport à la pièce d'origine.

### EXEMPLE 2

Cet exemple illustre la préparation d'un objet à partir du procédé de l'invention, cet objet se présentant, comme illustré sur la figure 2, sous forme d'une tige pleine 39 munie à chacune de ses extrémités d'un anneau plein lié à la tige (respectivement 41 et 43) et dans sa partie médiane, d'un anneau plein libre 45, c'est-à-dire un anneau plein non lié à la tige ou encore, en d'autres termes, pouvant se déplacer librement autour de la tige.

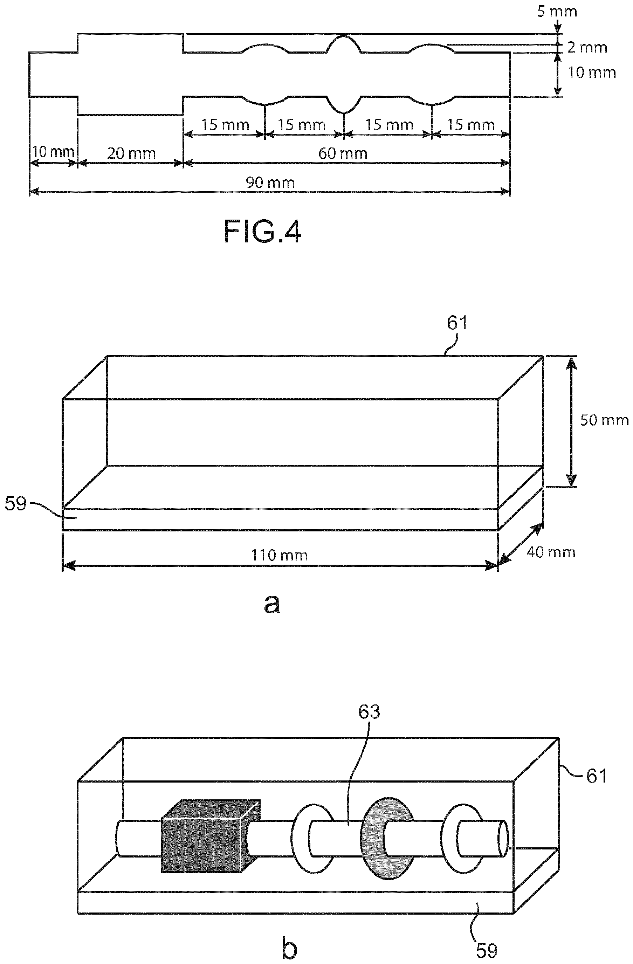

Cet objet est préparé à partir d'un modèle en aluminium de forme complexe représenté sur les figures 3 et 4 (respectivement une vue tridimensionnelle et une vue en coupe transversale comportant pour cette dernière les dimensions des différentes parties du modèle). Plus spécifiquement, ce modèle consiste en une tige cylindrique 47 muni au niveau de son extrémité amont 49 d'un guide 51 puis de deux anneaux 53 et 55 entourant un autre anneau central 57.

### a) Fabrication du moule

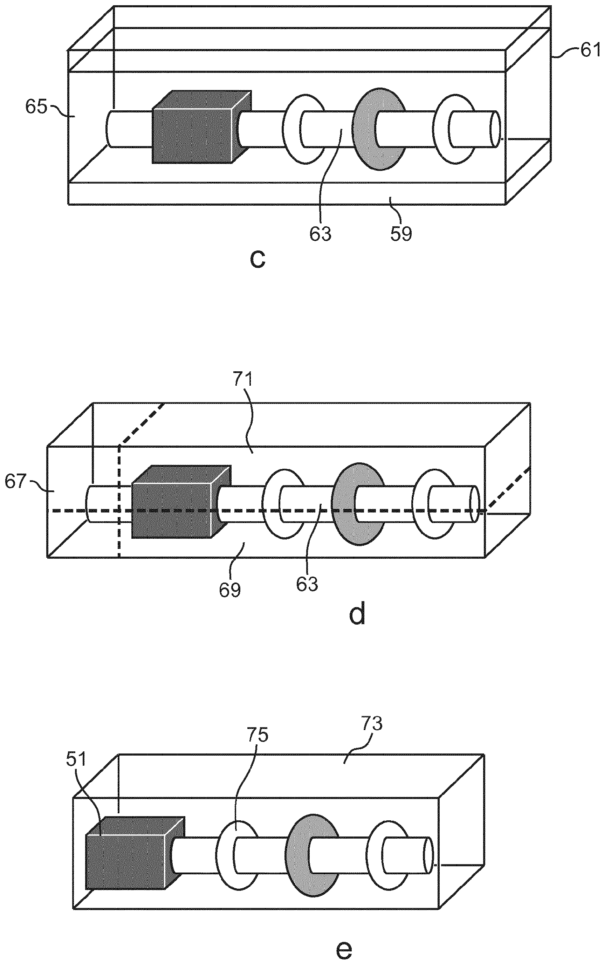

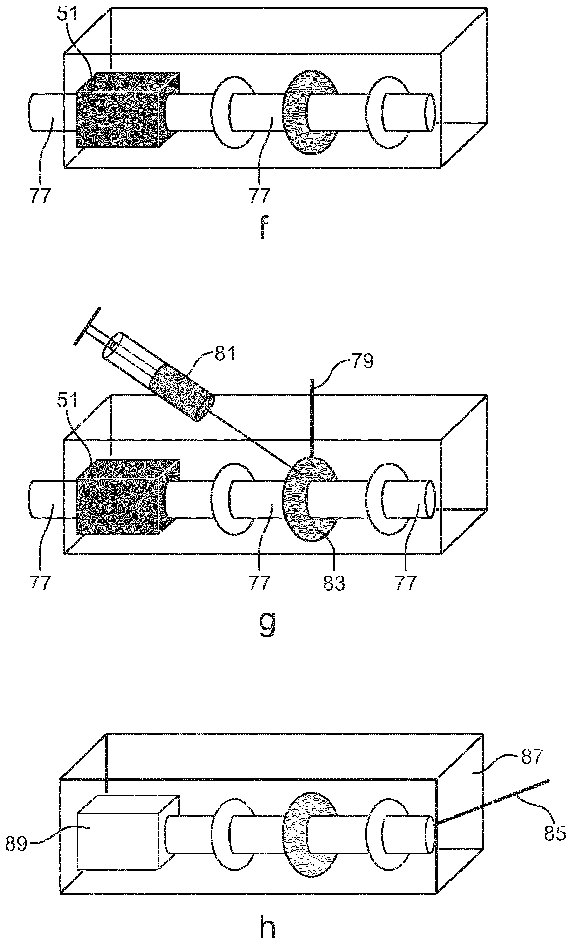

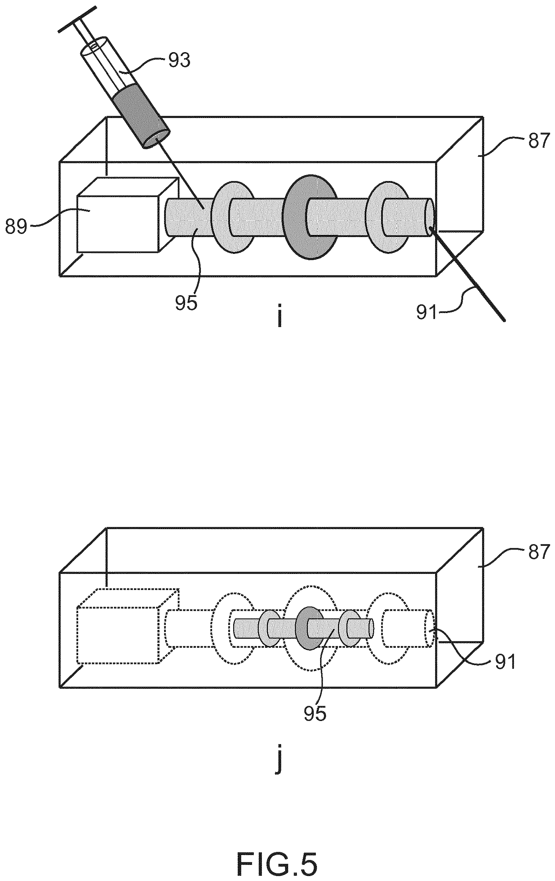

Le moule est préparé par la succession d'opérations suivantes illustrée par la figure 5 :
1- Préparation à l'aide d'une spatule d'un mélange (35 g) de deux composants, respectivement du polydiméthylsiloxane (PDMS) et un agent de réticulation selon un ratio de 10/1 (ces composants étant disponibles auprès de Dow-Corning sous la dénomination de SylGard 184) ;
2- Coulée de 25 g de ce mélange 59 dans un récipient parallélépipédique 61 en plexiglas de dimensions (110 mm*40 mm* 50 mm) sur une hauteur de 5 mm d'épaisseur (partie a) de la figure 5) ;
3- Mise sous vide poussé de l'ensemble pendant 20 minutes en cassant le vide suivi d'une cuisson à 70°C pendant 2 heures ;
4- Après cuisson du mélange (engendrant, ainsi, la réticulation du PDMS), placement du modèle 63 sur la couche de PDMS obtenu (partie b) de la figure 5);
5- Préparation à l'aide d'une spatule d'un mélange (200 g) de deux composants, respectivement du polydiméthylsiloxane (PDMS) et un agent de réticulation selon un ratio de 10/1 (ces composants étant disponibles auprès de Dow-Corning sous la dénomination de SylGard 184) suivi d'un dégazage sous vide poussé (20 minutes en cassant le vide) ;
6- Coulée du mélange 65 sur le modèle à mouler (posé sur la couche de PDMS préalablement mise en oeuvre) jusqu'à une hauteur de 10 mm au-dessus de la partie la plus haute de l'objet (partie c) de la figure 5);
7- Application d'un vide poussé pendant 30 minutes pour dégazer l'ensemble ;
8- Chauffage de l'ensemble à 70°C pendant 2 heures, de sorte à engendrer la réticulation du polydiméthylsiloxane, moyennant quoi il se forme une couche solide autour du modèle ;
9- Retrait du moule du récipient parallélépipédique ;
10- Découpe du surplus de PDMS jusqu'à l'obtention d'une épaisseur de moule uniforme de 5 mm ;
11- Ouverture du moule en PDMS en trois parties (une partie d'extrémité 67 affleurant le guide et deux parties 69 et 71 traversant sur sa longueur le modèle) à l'aide d'un scalpel selon les plans de découpe indiqués en pointillés sur la partie d) de la figure 5 pour retirer la pièce de départ prise dans le moule en PDMS ;
11- Placement uniquement du guide amovible 51 au niveau de l'ouverture supérieure du moule (partie e) de la figure 5) puis collage des deux parties susmentionnées par plasma selon les conditions suivantes :
   a- On place les deux parties du moule dans un plasma O₂ (Plasma O₂ AST Product Inc), les conditions suivantes étant appliquées pour activer les fonctions de surface du PDMS (PO₂ 1 bar; Puissance 20 Watt; Durée 20 sec; Réseau d'adaptation 50-50% ; Gaz 120 ; Flux de gaz 60 ; Point de fonctionnement 0,5) ;
   b- Après application du plasma, les deux surfaces du moule à coller sont mises en contact. Une pression est exercée pour améliorer le contact entre les deux surfaces et améliorer ainsi le collage ;
   c- L'ensemble est mis à l'étuve à 80°C pendant 4 heures, moyennant l'on obtient un moule 73 présentant une cavité interne 75 correspondant à la forme du modèle, ladite cavité interne étant comblé au niveau de l'espace ayant pour forme le guide du modèle par ce même guide 51 (partie e) de la figure 5) ;
12- Introduction via le guide amovible laissé dans le moule d'une tige cylindrique 77 pleine de 100 mm de longueur et de 10 mm de diamètre permettant également l'obturation du trou concentrique du guide et d'instaurer un caractère « enceinte fermée » au moule (partie f) de la figure 5).

### b) Fabrication de la solution sol-gel

La solution sol-gel est préparée par la succession suivante d'opérations :
1- Préparation de la solution 1 : Mélange à température ambiante sous agitation de 4,66 mL (0,0208 mol) de tétraéthylorthosilicate (78-10-4 Sigma-Aldrich) et 1,6 mL (0,068 mol) d'eau, auxquels on ajoute 4 mL d'éthanol anhydre puis 4 µL d'acide chlorhydrique à 1M sous agitation ;
2- Préparation de la solution 2 : Mélange à température ambiante sous agitation de 9,32 mL (0,0416 mol) de tétraéthylorthosilicate (78-10-4 Sigma-Aldrich) et 3,2 mL (0,068 mol) d'eau, auxquels on ajoute 8 mL d'éthanol anhydre puis 8 µL d'acide chlorhydrique à 1M sous agitation ;
3- Placement des solutions 1 et 2 dans des flacons distincts fermés hermétiquement à l'étuve à 80°C pendant 4 heures pour hydrolyse ;
4- Après 4 heures d'hydrolyse, retrait des flacons de l'étuve et refroidissement de ceux-ci à température ambiante.

### c) Fabrication de l'objet en tant que tel

L'objet est préparé selon la succession d'opérations suivantes :
1- Introduction d'une aiguille 79 dans la partie supérieure du moule pour permettre l'évacuation de l'air, lorsque la solution de sol-gel sera injectée (partie g) de la figure 5) ;
2-Ajout à la solution 1 de 0,5 mL d'une solution préparée par dissolution de 30 µL d'une solution d'ammoniaque dans 5 mL d'éthanol anhydre suivi d'une agitation, la solution résultante devant être utilisée sans délai ;
3- Prélèvement de la solution sol-gel précédemment préparée au moyen d'une seringue comportant une aiguille de 0,8 mm de diamètre ;
4- Insertion de l'aiguille 81 de la seringue contenant la solution sol-gel (qui vient juste d'être prélevée) dans un compartiment 83 de la cavité interne du moule correspondant à l'anneau central suivie d'une injection lente de la solution pour éviter d'avoir un régime turbulent en sortie de l'aiguille 81 et éviter la formation de bulles d'air sur les parois du moule (partie g) de la figure 5) ;
5- Retrait de l'aiguille d'injection 81, lorsque la cavité interne du moule est remplie de la solution sol-gel puis retrait de l'aiguille d'évacuation d'air 79 ;
6- Mise au repos du moule contenant la solution sol-gel à température ambiante pendant 1 heure jusqu'à l'obtention d'un gel ;
7-Après introduction d'une aiguille 85 pour l'entrée de l'air à l'extrémité avale 87 du moule, retrait de la tige puis du guide, ce guide permettant pendant le retrait de la tige de la maintenir droite de sorte à éviter l'endommagement du gel (partie h) de la figure 5) ;
8- Introduction dans l'espace vacant laissé par le retrait du guide d'une pièce en PDMS 89 de mêmes dimensions, de sorte à restaurer le caractère « enceinte fermée » au moule et à permettre un séchage homogène du gel (partie h) de la figure 5) ;
9- Introduction d'une aiguille 91 à l'extrémité avale 87 du moule pour permettre l'évacuation de l'air, lorsque la solution de sol-gel sera injectée (partie i) de la figure 5) ;
10-Ajout à la solution 2 précédente d'une solution préparée par dissolution de 30 µL d'une solution d'ammoniaque dans 5 mL d'éthanol anhydre suivi d'une agitation, la solution résultante devant être utilisée sans délai ;
11- Prélèvement de la solution sol-gel précédemment préparée au moyen d'une seringue comportant une aiguille de 0,8 mm de diamètre ;
12- Insertion de l'aiguille 93 de la seringue contenant la solution sol-gel (qui vient juste d'être prélevée) dans un compartiment 95 de la cavité interne du moule dont la forme correspond à celle du la tige cylindrique munie de ses deux anneaux d'extrémité suivie d'une injection lente de la solution pour éviter d'avoir un régime turbulent en sortie de l'aiguille 93 et éviter la formation de bulles d'air sur les parois du moule (partie i) de la figure 5) ;
13- Retrait de l'aiguille d'injection 93, lorsque la cavité interne du moule est remplie de la solution sol-gel puis retrait de l'aiguille d'évacuation d'air 91 ;
14- Mise au repos du moule contenant la solution sol-gel à température ambiante pendant 1 heure jusqu'à l'obtention d'un gel ;
15- Séchage de l'ensemble dans un four rotatif (Agilent technologies, model GA) à 70°C pendant 10 jours, moyennant quoi l'on obtient, au sein du moule, l'objet 95 représenté sur la figure 2 (partie j) de la figure 5) ;
16- Après séchage, ouverture du moule en PDMS en deux parties pour retirer la pièce sol-gel ainsi fabriquée, l'anneau central se désolidarisant de la tige du fait d'un rétreint lors du séchage du gel issu de la solution 2 plus important que celui obtenu avec le gel issu de la solution 1.

L'objet obtenu présente des dimensions plus faibles que celles de la pièce d'origine (50% de rétreint), sans que cela n'affecte la forme par rapport à la pièce d'origine.

### EXEMPLE 3

Cet exemple illustre la préparation d'un objet à partir du procédé de l'invention, cet objet étant un cube de 1 cm de côté traversé par un canal de 1 mm de diamètre sous forme d'un serpentin.

### a)Fabrication du moule

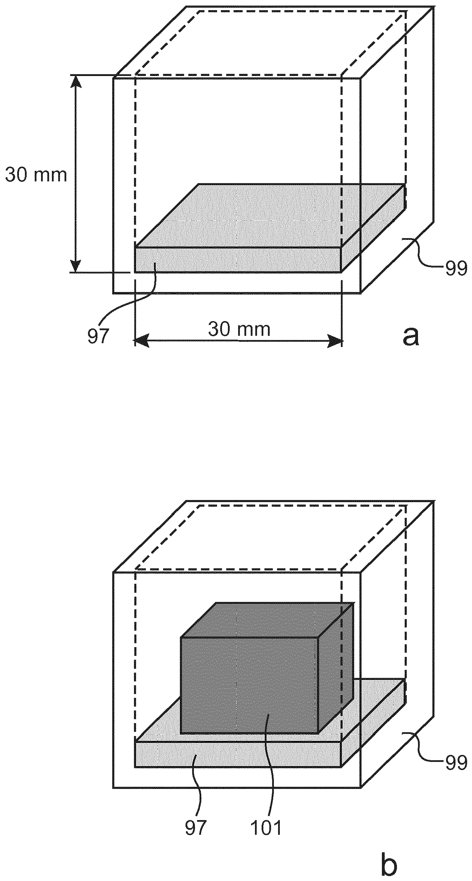

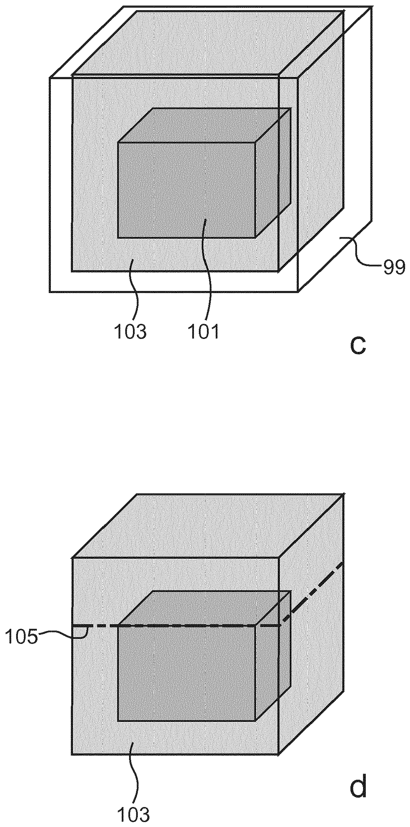

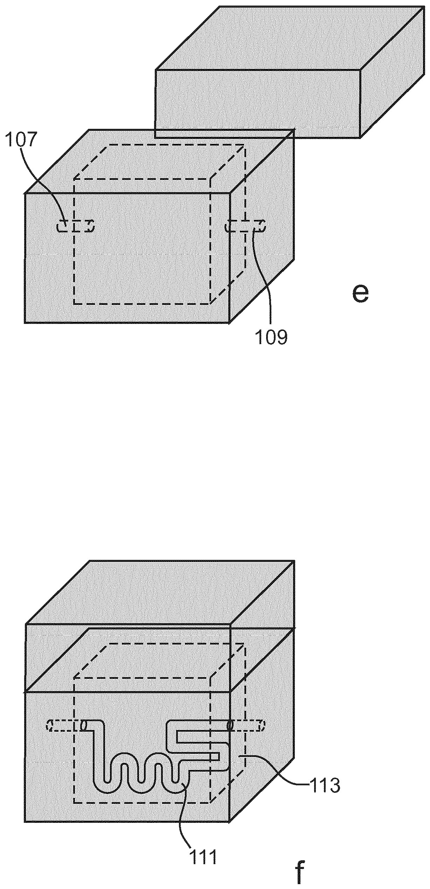

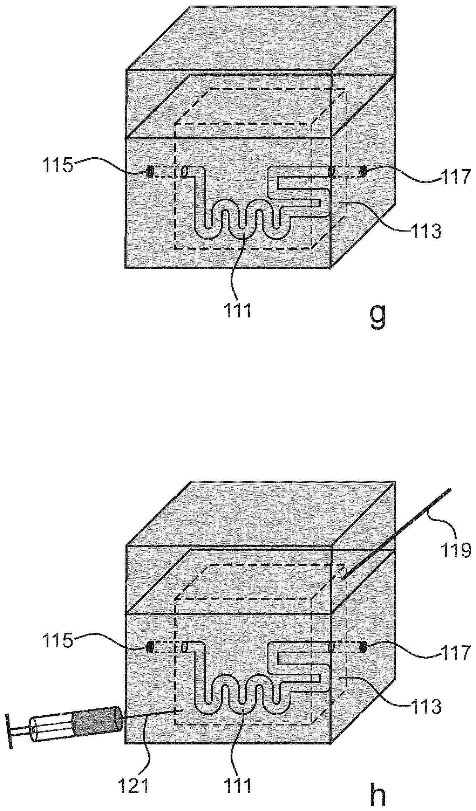

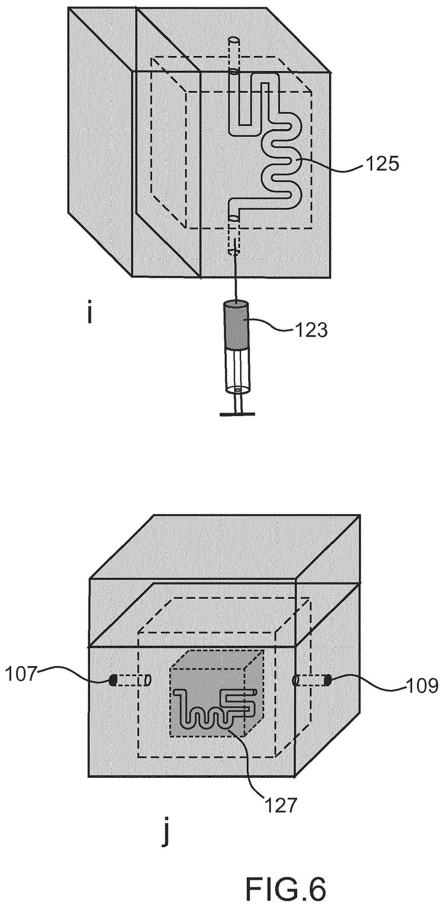

Le moule est préparé par la succession d'opérations suivantes, illustrées par la figure 6 (parties a) à j)) :
1- Préparation à l'aide d'une spatule d'un mélange (10 g) de deux composants, respectivement du polydiméthylsiloxane (PDMS) et un agent de réticulation selon un ratio de 10/1 (ces composants étant disponibles auprès de Dow-Corning sous la dénomination de SylGard 184) ;
2- Coulée de 5 g ce mélange 97 dans un récipient 99 en plexiglas de forme cubique de 3 cm de côté (partie a) de la figure 6);
3- Mise sous vide poussé de l'ensemble pendant 20 minutes en cassant le vide suivi d'une cuisson à 70°C pendant 2 heures ;
4- Après cuisson du mélange à 70°C pendant 2 heures (engendrant, ainsi, la réticulation du PDMS), placement d'un cube en aluminium 101 de 2cm de côté sur la première couche de PDMS (partie b) de la figure 6) ;
5- Préparation à l'aide d'une spatule d'un mélange (30 g) de deux composants, respectivement du polydiméthylsiloxane (PDMS) et un agent de réticulation selon un ratio de 10/1 (ces composants étant disponibles auprès de Dow-Corning sous la dénomination de SylGard 184) suivi d'un dégazage sous vide poussé (20 minutes en cassant le vide) ;
6- Coulée de 20 g du mélange 103 sur l'objet à mouler (posée sur la couche de PDMS préalablement mise en oeuvre) jusqu' à une hauteur de 5mm au-dessus du modèle (partie c) de la figure 6) ;
7-Application d'un vide poussé pendant 30 minutes pour dégazer l'ensemble;
8-Chauffage de l'ensemble à 70°C pendant 2 heures, de sorte à engendrer la réticulation du polydiméthylsiloxane, moyennant quoi il se forme une couche solide autour de la pièce ;
9-Démoulage manuel du moule du récipient de moulage ;
10-Découpe du moule selon le plan découpe 105 indiqué en pointillés sur la partie d) de la figure 6, de sorte à permettre à libérer le cube ;
11-Après libération du cube, usinage de deux trous 107 et 109 de diamètre 2 mm sur deux côtés opposés du moule, ces trous ayant pour vocation de fixer un serpentin en cire (partie e) de la figure 6);
12-Placement des deux parties du moule dans un plasma O₂ (Plasma O₂ AST Product Inc), les conditions suivantes étant appliquées pour activer les fonctions de surface du PDMS (P_{O2}=1 bar, Puissance : 20 Watts, Durée : 20 secondes, Réseau d'adaptation 50-50% ; gaz 120 ; Flux de gaz 60 ; Point de fonctionnement 0,5) ;
13-Après application du plasma, le serpentin en cire 111 est rapidement mis en place en le fixant aux deux trous puis les deux surfaces du moule à coller sont mises en contact. Une pression est exercée pour améliorer le contact entre les deux surfaces et améliorer ainsi le collage ;
14- L'ensemble est gardé à température ambiante pendant deux jours, moyennant quoi l'on obtient un moule présentant une cavité interne 113 correspondant à la forme de l'objet que l'on souhaite obtenir (partie f) de la figure 6).

### b)Fabrication de la solution sol-gel

La solution sol-gel est préparée par la succession suivante d'opérations :
1- Mélange à température ambiante sous agitation de 9,32 mL (0,0416 mol) de tétraéthylorthosilicate (78-10-4 Sigma-Aldrich) et 3,2 mL (0,136 mol) d'eau, auxquels on ajoute 8 mL d'éthanol anhydre puis 8 µL d'acide chlorhydrique à 1M sous agitation ;
2- Mise de la solution obtenue en 1 dans un pilulier fermé hermétiquement à l'étuve à 80°C pendant 4 heures pour hydrolyse ;
3- Après 4 heures d'hydrolyse, retrait de solution de l'étuve et refroidissement à température ambiante.

### c) Fabrication de l'objet en tant que tel

L'objet est préparé selon la succession d'opérations suivantes
1- Placement de bouchons hermétiques 115 et 117 pour boucher les trous formés pour supporter le serpentin en cire (partie g) de la figure 6) ;
2- Introduction d'une aiguille 119 dans la partie supérieure du moule pour permettre l'évacuation de l'air, lorsque la solution de sol-gel sera injectée;
3- Ajout à la solution sol-gel obtenue ci-dessus, de 1 mL d'une solution préparée par dissolution de 30 µL d'une solution d'ammoniaque dans 5 mL d'éthanol anhydre, la solution sol-gel résultante devant être injectée dans le moule juste après cette étape ;
4- Insertion de l'aiguille 121 de la seringue contenant 10 mL la solution sol-gel (qui vient juste d'être prélevée) dans la cavité interne du moule suivie d'une injection lente de la solution pour éviter d'avoir un régime turbulent en sortie de l'aiguille 119 et éviter la formation de bulles d'air sur les parois du moule (partie h) de la figure 6) ;
5- Mise au repos du moule contenant la solution sol-gel à température ambiante pendant 1 heure jusqu'à l'obtention d'un gel ;
6- Chauffage de l'ensemble à 50°C, jusqu'à la fusion du serpentin en cire. Aspiration de la cire fondue avec une seringue 123 puis lavage du canal 125 ainsi obtenu avec un solvant (de préférence de l'éthanol, solvant qui a servi à la formulation du sol-gel) (partie i) de la figure 6) ;
7-Retrait de la seringue 123 et obturation de l'orifice d'entrée du trou 107 puis séchage de l'ensemble dans un four rotatif (Agilent technologies, model GA) à 70°C pendant 10 jours à une vitesse de rotation inférieure à une rotation par minute, l'objet séché 127 présentant un rétreint par rapport à l'objet d'origine(partie j) de la figure 6) ;
8- Après séchage, ouverture du moule en PDMS en deux parties pour retirer l'objet ainsi fabriqué.

L'objet obtenu présente des dimensions plus faibles que celles de la pièce d'origine, sans que cela n'affecte la forme par rapport à la pièce d'origine.

## Revendications

1. Procédé de fabrication d'un objet moulé à partir d'un moule comprenant une cavité interne comprenant un ou plusieurs compartiments et au moins une pièce amovible présente au sein de ladite cavité interne, ledit objet étant en un matériau organique ou inorganique durci, ledit procédé comprenant successivement au moins un cycle d'étapes suivantes :
a) une étape de remplissage complet d'au moins un compartiment de la cavité interne du moule, ledit compartiment ayant une forme correspondant à tout ou partie de l'objet, que l'on souhaite obtenir, par une composition liquide durcissable par réaction chimique pour former ledit matériau, ladite composition comprenant au moins un solvant;
b) une étape de durcissement par réaction chimique de ladite composition au sein dudit moule ;
c) une étape de retrait d'au moins une pièce amovible dudit moule ; et
d) une étape de séchage au sein dudit moule de la composition durcie obtenue en b),
dans lequel tout ou partie des étapes a) à d) peuvent être réitérées avec une composition liquide durcissable identique ou différente de celle utilisée lors dudit cycle jusqu'à obtention de l'objet moulé et,
dans lequel ledit moule, au moins lors de la mise en oeuvre de chaque étape d), est une enceinte fermée, dont les parois formant frontière entre la cavité interne et l'extérieur du moule sont en au moins un matériau apte à permettre l'évacuation des gaz issus de ladite étape d).

2. Procédé selon la revendication 1, dans lequel les parois formant frontière entre la cavité interne et l'extérieur du moule sont en un matériau élastomère.

3. Procédé selon la revendication 1 ou 2, dans lequel les parois formant frontière entre la cavité interne et l'extérieur du moule sont en un matériau de la famille des polysiloxanes.

4. Procédé selon l'une quelconque des revendications précédentes, dans lequel les parois formant frontière entre la cavité interne et l'extérieur du moule sont en un matériau de la famille des polydiméthylsiloxanes.

5. Procédé selon l'une quelconque des revendications précédentes, comprenant, avant l'étape a), une étape de préparation du moule de l'objet à fabriquer.

6. Procédé selon l'une quelconque des revendications précédentes, comprenant, avant l'étape a), une étape de préparation de la composition liquide durcissable.

7. Procédé selon l'une quelconque des revendications précédentes, dans lequel l'étape de retrait est réalisée avec au moins un guide, qui va permettre le déplacement de la ou lesdites pièces amovibles selon une seule direction, pour éviter tous déplacements aléatoires susceptibles de dégrader l'intégrité physique du matériau durci.

8. Procédé selon l'une quelconque des revendications précédentes, dans lequel le procédé comprend, dans le cas où l'étape de retrait laisse une ouverture permettant la communication de la cavité interne avec l'extérieur, une étape de fermeture dudit moule, de préférence avec un matériau obturant apte à permettre l'évacuation des gaz issus de ladite étape d).

9. Procédé selon l'une quelconque des revendications précédentes, dans lequel la ou les pièces amovibles sont en un matériau sacrificiel, c'est-à-dire en un matériau destiné à être dégradé ou à changer d'état puis à être éliminé au cours du procédé.

10. Procédé selon l'une quelconque des revendications précédentes, dans lequel la composition liquide durcissable est :
- une composition organique polymérisable et/ou réticulable, auquel cas le matériau organique durci de l'objet est un matériau organique polymérique ; ou
- une composition consistant en une solution sol-gel, auquel le matériau inorganique durci de l'objet est un matériau sol-gel.

## Patentansprüche

1. Verfahren zum Herstellen eines geformten Gegenstands aus einer Gießform, die einen inneren Hohlraum mit einem Fach bzw. mehreren Fächern und zumindest ein abnehmbares Teil enthält, das innerhalb des inneren Hohlraums vorhanden ist, wobei der Gegenstand aus einem gehärteten, organischen oder anorganischen Material besteht, wobei das Verfahren aufeinanderfolgend zumindest einen Zyklus aus den nachstehenden Schritten umfasst:
a) einen Schritt des vollständigen Verfüllens von zumindest einem Fach des inneren Hohlraums der Gießform, wobei das Fach eine dem gesamten Gegenstand oder einem Teil davon entsprechende Form hat, die erhalten werden soll, und zwar mit einer flüssigen Zusammensetzung, die durch chemische Reaktion härtbar ist, um das Material zu formen, wobei die Zusammensetzung zumindest ein Lösungsmittel enthält;
b) einen Schritt des Härtens der Zusammensetzung durch chemische Reaktion innerhalb der Gießform;
c) einen Schritt des Entfernens von zumindest einem abnehmbaren Teil aus der Gießform; und
d) einen Schritt des Trocknens der in b) erhaltenen, gehärteten Zusammensetzung innerhalb der Gießform,
wobei sämtliche Schritte a) bis d) oder ein Teil davon mit einer härtbaren, flüssigen Zusammensetzung wiederholt werden können/kann, die mit derjenigen identisch ist oder sich davon unterscheidet, die bei dem Zyklus bis zum Erhalt des geformten Gegenstands verwendet wird, und
wobei die Gießform zumindest einem Durchführen von jedem Schritt d) ein abgeschlossener Raum ist, bei dem die Wände, die eine Grenze zwischen dem inneren Hohlraum und dem Außenbereich der Gießform bilden, aus zumindest einem Material bestehen, das das Abführen von in Schritt d) entstandenen Gasen zulässt.

2. Verfahren nach Anspruch 1, wobei die eine Grenze zwischen dem inneren Hohlraum und dem Außenbereich der Gießform bildenden Wände aus einem Elastomermaterial bestehen.

3. Verfahren nach Anspruch 1 oder 2, wobei die eine Grenze zwischen dem inneren Hohlraum und dem Außenbereich der Gießform bildenden Wände aus einem Material aus der Familie der Polysiloxane bestehen.

4. Verfahren nach einem der vorangehenden Ansprüche, wobei die eine Grenze zwischen dem inneren Hohlraum und dem Außenbereich der Gießform bildenden Wände aus einem Material aus der Familie der Polydimethylsiloxane bestehen.

5. Verfahren nach einem der vorangehenden Ansprüche, umfassend vor dem Schritt a) einen Schritt des Bereitstellens der Gießform für den herzustellenden Gegenstand.

6. Verfahren nach einem der vorangehenden Ansprüche, umfassend vor dem Schritt a) einen Schritt des Bereitstellens der härtbaren, flüssigen Zusammensetzung.

7. Verfahren nach einem der vorangehenden Ansprüche, wobei der Schritt des Entfernens mit zumindest einer Führung erfolgt, welche die Verlagerung des bzw. der abnehmbaren Teile in nur einer Richtung gestattet, um jegliche willkürlichen Verlagerungen zu vermeiden, welche die physische Unversehrtheit des gehärteten Materials beeinträchtigen könnten.

8. Verfahren nach einem der vorangehenden Ansprüche, wobei das Verfahren für den Falle, dass der Schritt des Entfernens eine Öffnung zum Kommunizieren des inneren Hohlraums mit dem Außenbereich freilässt, einen Schritt des Verschließens der Gießform umfasst, vorzugsweise mit einem Verschlussmaterial, welches das Abführen von in Schritt d) entstandenen Gasen zulässt.

9. Verfahren nach einem der vorangehenden Ansprüche, wobei das bzw. die abnehmbaren Teile aus einem Opfermaterial bestehen, d h. aus einem Material, das dazu bestimmt ist, zersetzt zu werden bzw. den Zustand zu ändern und dann im Laufe des Verfahrens beseitigt zu werden.

10. Verfahren nach einem der vorangehenden Ansprüche, wobei die härtbare, flüssige Zusammensetzung
- eine polymerisierbare und/oder vernetzbare, organische Zusammensetzung ist, wobei in diesem Falle das gehärtete, organische Material des Gegenstands ein organisches Polymermaterial ist; oder
- eine Zusammensetzung ist, die aus einer Sol-Gel-Lösung besteht, wobei das gehärtete, anorganische Material des Gegenstands ein Sol-Gel-Material ist.

## Claims

1. A method for manufacturing a molded object from a mold comprising an internal cavity comprising one or several compartments and at least one removable part present within said internal cavity, said object being in a cured organic or inorganic material, said method successively comprising at least one cycle of following steps:
a) a step for completely filling at least one compartment of the internal cavity of the mold, said compartment having a shape corresponding to all or part of the object, which one wishes to obtain, with a curable liquid composition by chemical reaction for forming said material, said composition comprising at least one solvent;
b) a step for curing by chemical reaction said composition within said mold;
c) a step for withdrawing at least one removable part from said mold; and
d) a step for drying within said mold the cured composition obtained in b),
wherein all or part of steps a) to d) may be repeated with a curable liquid composition either identical or different from the one used during said cycle until the molded object is obtained and,
wherein said mold, at least during the application of each step d) is a closed chamber, the walls of which forming a boundary between the internal cavity and the outside of the mold are in at least one material able to allow discharge of the gases from said step d).

2. The method according to claim 1, wherein the walls forming a boundary between the internal cavity and the outside of the mold are in an elastomeric material.

3. The method according to claim 1 or 2, wherein the walls forming a boundary between the internal cavity and the outside of the mold is in a material from the family of polysiloxanes.

4. The method according to any of the preceding claims, wherein the walls forming a boundary between the internal cavity and the outside of the mold are in a material from the family of polydimethylsiloxanes.

5. The method according to any of the preceding claims, comprising, before step a), a step for preparing the mold for the object to be made.

6. The method according to any of the preceding claims, comprising, before step a), a step for preparing the curable liquid composition.

7. The method according to any of the preceding claims, wherein the withdrawal step is carried out with at least one guide, which will allow displacement of the removable part(s) along a single direction, in order to avoid all random displacements which may degrade the physical integrity of the cured material.

8. The method according to any of the preceding claims, wherein the method comprises, in the case when the withdrawal step leaves an aperture allowing communication of the internal cavity with the outside, a step for closing said mold, preferably with an obturating material able to allow release of the gases from said step d).

9. The method according to any of the preceding claims, wherein the removable part(s) is(are) in a sacrificial material, i.e. in a material intended to be degraded or to change state and then be removed during the method.

10. The method according to any of the preceding claims, wherein the curable liquid composition is:
- a polymerizable and/or cross-linkable organic composition, in which case the cured organic material of the object is a polymeric organic material; or
- a composition consisting in a sol-gel solution, at which the cured inorganic material of the object is a sol-gel material.
